# FASCICULE DE BREVET EUROPEEN

(11) **EP 3 511 213 B1**
(45) Date de publication et mention de la délivrance du brevet: **11.11.2020**
(21) Numéro de dépôt: 18210492.7
(22) Date de dépôt: 05.12.2018
(51) Int. Cl.: B60T 1/14, B60T 7/12

(54) **VÉHICULE FERROVIAIRE COMPRENANT UN DISPOSITIF DE FREINAGE D'URGENCE**
SCHIENENFAHRZEUG, DAS EINE NOT-BREMSVORRICHTUNG UMFASST
RAILWAY VEHICLE COMPRISING AN EMERGENCY BRAKING SYSTEM

(30) Priorité: 05.12.2017 FR 1761639
(43) Date de publication de la demande: 17.07.2019
(73) Titulaire: ALSTOM Transport Technologies, 93400 Saint-Ouen (FR)
(72) Inventeur: HALLONET, Frederic, 17220 LA JARNE (FR)
(74) Mandataire: Lavoix

(56) Documents cités:
- EP-A2- 2 586 668
- CN-U- 203 727 347
- CN-Y- 2 280 032
- FR-A1- 2 245 514
- FR-A1- 2 917 361
- GB-A- 176 041
- GB-A- 2 517 350
- JP-A- 2006 282 095
- US-A1- 2016 347 332

## Description

La présente invention concerne un véhicule ferroviaire comprenant au moins une caisse, le véhicule étant destiné à circuler sur une voie ferrée, le véhicule comprenant un dispositif de freinage d'urgence.

Les véhicules ferroviaires, notamment les tramways, sont équipés de différents systèmes de freinage d'urgence. Généralement, les systèmes de freins employés sont des systèmes mécaniques, électrodynamiques, hydrodynamiques ou magnétiques.

Lors du freinage d'un véhicule ferroviaire, la force de freinage résulte principalement de l'adhérence entre les roues du véhicule et les rails formant la voie sur laquelle le véhicule circule.

Le dispositif décrit par le document FR 2 917 361 A1 concerne un dispositif permettant d'arrêter un train en perdition, en faisant, par l'intermédiaire d'un mécanisme solidaire du châssis de chaque wagon, frotter un frein ski directement sur chaque rail.Ce mécanisme est constitué par deux axes horizontaux, placés perpendiculairement à l'axe du wagon et reliés au châssis par une suspension à ressorts dérivée de celles des essieux. Ces axes comportent chacun une paire de jambes reliées chacune, à leur extrémité inférieure, au ski, par une articulation. En fonctionnement, ces jambes, centrées sur leur axe, vont pivoter et se bloquer en position verticale, provoquant par la même la mise en compression des skis sur les rails.

Un dispositif d'arrêt d'urgence est par exemple décrit dans WO2014/049485.

Ce dispositif comprend des plaques de frein destinées à entrer en contact avec l'extérieur du rail sur lequel le véhicule ferroviaire circule afin de ralentir le véhicule. Cependant, ce dispositif n'est pas adapté en cas de sortie du véhicule ferroviaire de la voie sur laquelle il circule, puisqu'il nécessite un contact des freins avec les rails.

En raison d'un très faible coefficient de frottement entre les roues en acier et le sol, les véhicules déraillés, c'est-à-dire sortis des rails, deviennent très dangereux et ne sont pas arrêtés par les systèmes de freinage d'urgence prévus pour arrêter les véhicules lorsqu'ils sont sur les rails. Des dommages forts pourraient survenir alors qu'ils se déplacent de manière incontrôlée.

En outre, les dispositifs de freinage d'urgence connus entraînent un freinage brusque, le plus souvent désagréable pour les voyageurs.

L'un des buts de l'invention est de pallier les inconvénients décrits ci-dessus.

A cet effet, l'invention a pour objet un véhicule ferroviaire comprenant au moins une caisse, le véhicule étant destiné à circuler sur une voie ferrée, le véhicule comprenant un dispositif de freinage d'urgence, le dispositif comprenant :
- au moins un module de freinage, chaque module comprenant un élément de contact destiné à être en contact avec le sol au moment du freinage, l'élément de contact étant mobile entre une position escamotée dans laquelle l'élément de contact n'est pas en contact avec le sol, et une position déployée dans laquelle l'élément de contact est en contact avec le sol et est apte à ralentir le véhicule ferroviaire en mouvement en appliquant un effort de pression au sol, et
- au moins une unité de contrôle propre à communiquer des ordres au module de freinage,
dans lequel l'unité de contrôle est apte à communiquer au module de freinage l'ordre de déployer l'élément de contact du module de freinage dans sa position déployée lorsqu'au moins une partie du véhicule sort de la voie ferrée sur laquelle le véhicule circule.

Un tel dispositif de freinage d'urgence permet de compenser le défaut d'adhérence entre les roues du véhicule et un revêtement de sol lorsque le véhicule est sorti de la voie ferrée sur laquelle il circule, et ainsi d'éviter des dégâts matériels et humains pouvant être causés par un tel défaut d'adhérence.

La distance de course après un déraillement d'un véhicule ferroviaire comprenant un tel dispositif de freinage d'urgence est ainsi maîtrisée et limitée.

Le véhicule ferroviaire selon l'invention peut comprendre l'une ou plusieurs des caractéristiques suivantes, prises seules ou selon toutes combinaisons techniquement envisageables :
- le véhicule s'étend suivant une direction longitudinale, dans lequel l'unité de contrôle comprend un capteur de mesure d'accélération longitudinale du véhicule et un calculateur de la dérivée de l'accélération longitudinale, l'unité de contrôle étant apte à asservir l'effort de pression au sol du module de freinage à l'accélération et à la dérivée de l'accélération dans la direction longitudinale ;
- le module de freinage comprend un actionneur apte à déployer l'élément de contact de la position escamotée à la position déployée de manière contrôlée par l'unité de contrôle ;
- l'élément de contact du module de freinage est un coussin gonflable et l'actionneur est un système pyrotechnique comprenant des charges ;
- l'élément de contact du module de freinage est un patin de contact et l'actionneur est un dispositif de liaison reliant le patin mécanique à la caisse du véhicule ferroviaire ;
- l'unité de contrôle comprend, en outre, un capteur de mesure d'accélération transversale du véhicule apte à détecter un choc entre le véhicule ferroviaire et un élément extérieur au véhicule ; et
- le véhicule comprend une pluralité de voitures, chaque voiture comprenant au moins un module de freinage et dans lequel l'unité de contrôle est agencée pour déployer chaque élément de contact de la position escamotée à la position déployée de sorte que l'effort de pression au sol de chaque module de freinage soit dégressif de l'arrière du véhicule vers l'avant du véhicule.

L'invention concerne également un procédé de freinage d'urgence pour un véhicule ferroviaire après une sortie de voie du véhicule, le procédé comprenant les étapes suivantes :
- fourniture du dispositif de freinage d'urgence selon l'invention ;
- détection d'une sortie de la voie d'au moins une partie du véhicule ferroviaire ;
- activation de l'unité de contrôle ;
- activation du module de freinage par l'unité de contrôle ;
- déploiement de l'élément de contact du module de freinage de la position escamotée à la position déployée pour que l'élément de contact entre en contact avec le sol ; et
- freinage du véhicule ferroviaire.

Suivant des modes de réalisation particuliers de l'invention, le procédé selon l'invention peut comprendre l'une ou plusieurs des caractéristiques suivantes, prises seules ou selon toutes combinaisons techniquement envisageables :
- le véhicule comporte une pluralité de voitures comportant chacune au moins un module de freinage, et dans lequel l'effort de pression au sol est dégressif de l'arrière du véhicule vers l'avant du véhicule ; et
- le procédé de freinage comprend en outre une étape de régulation de l'effort de pression au sol de chaque module de freinage par l'unité de contrôle pour que la distance de freinage soit la plus courte possible.

L'invention sera mieux comprise à la lecture de la description qui va suivre, donnée uniquement à titre d'exemple et faite en se référant aux dessins sur lesquels :
- la figure 1 est une vue schématique latérale d'un véhicule ferroviaire équipé d'un dispositif de freinage d'urgence selon un premier mode de réalisation de l'invention, dans lequel l'élément de freinage est en position escamotée ;
- la figure 2 est une vue schématique du véhicule de la figure 1, dans lequel l'élément de freinage est en position déployée ;
- la figure 3 est une vue schématique d'un véhicule ferroviaire équipé d'un dispositif de freinage d'urgence selon un deuxième mode de réalisation de l'invention, dans lequel l'élément de freinage est en position escamotée ; et
- la figure 4 est une vue schématique latérale du véhicule de la figure 3, dans lequel l'élément de freinage est en position déployée.

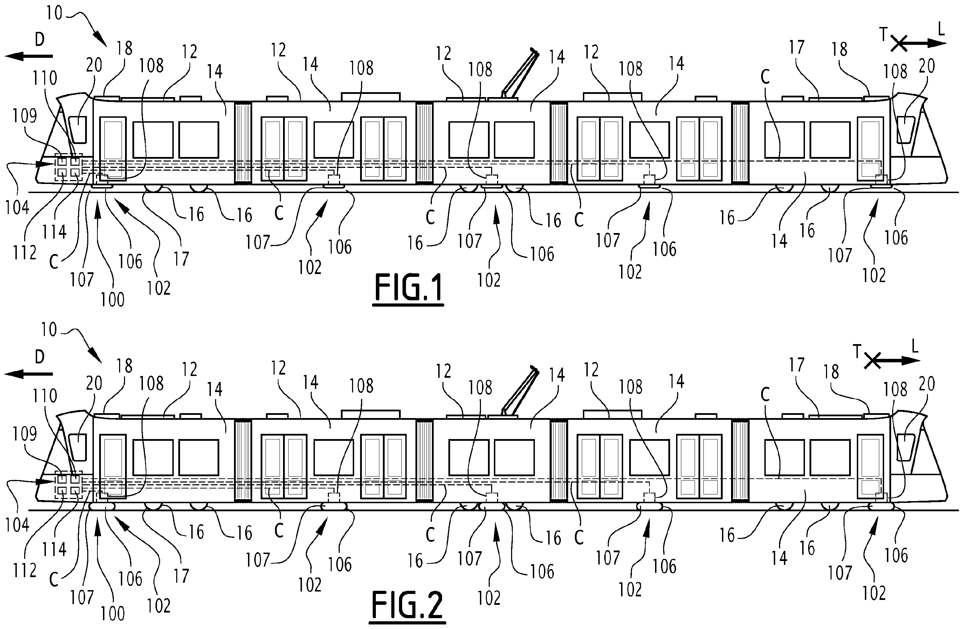

On a représenté, sur les figures 1 et 2, un véhicule ferroviaire 10, par exemple un tramway, selon un premier mode de réalisation de l'invention.

Le véhicule 10 est propre à circuler sur une voie, notamment une voie ferrée, c'est-à-dire formée par des rails sur lesquels le véhicule 10 est disposé et définissant la trajectoire suivie par le véhicule 10.

Le véhicule ferroviaire 10 comprend une pluralité de voitures 12.

Chaque voiture 12 comprend une caisse 14.

Au moins une voiture 12 comprend des roues 16 comme connu en soi.

Chaque roue 16 comprend une partie extérieure 17 destinée à entrer en contact avec le rail sur lequel la roue 16 est positionnée. Selon un mode de réalisation, la partie extérieure 17 est réalisée en métal.

Le véhicule 10 comprend au moins une voiture d'extrémité 18.

Dans tout ce qui suit les termes « avant », « arrière », « gauche », « droit », « sur » et « sous » s'entendent par rapport au sens de déplacement vers l'avant indiqué par une flèche D sur les figures. Les termes « longitudinal », « transversal », s'entendent par rapport au véhicule 10.

En effet, le véhicule 10 est propre à circuler dans les deux sens, les extrémités avant et arrière étant identiques.

Selon le sens de circulation, l'une des voitures d'extrémités 18 forme une voiture de tête, qui est celle qui se situe à l'avant du véhicule 10 par rapport au sens de déplacement.

Chaque voiture d'extrémité 18 présente une cabine de pilotage 20, prévue à une extrémité 22 de la voiture d'extrémité 18.

Le véhicule 10 comprend au moins un système de freinage de service choisi parmi un frein hydromécanique, un frein électromagnétique et un frein électromécanique. Ce système de freinage est utilisé au cours du fonctionnement normal du véhicule 10 pour ralentir et/ou arrêter celui-ci.

Le véhicule 10 comprend en outre un dispositif de freinage d'urgence 100 agencé pour freiner le véhicule 10 lorsqu'au moins une partie du véhicule 10 sort de la voie sur laquelle ce véhicule circule, c'est-à-dire lorsque le véhicule « déraille »..

Au moins une voiture 12, 18 comprend le dispositif de freinage d'urgence 100. De préférence, chaque voiture 12, 18 comporte le dispositif de freinage d'urgence 100.

Le dispositif de freinage d'urgence 100 comprend au moins un module de freinage 102 et une unité de contrôle 104 propre à communiquer des ordres au module de freinage 102.

Le module de freinage 102 est relié à la caisse 14 du véhicule 10 par des éléments de fixation, tels que des boulons ou des rivets.

De préférence, le module de freinage 102 est situé sous la voiture 12, 18 correspondante.

Le module de freinage 102 comprend un élément de contact 106 dont au moins une partie 107 est destinée à être en contact avec le sol au moment du freinage.

La partie 107 de l'élément de contact 106 destinée à être en contact avec le sol est réalisée dans un matériau apte à maximiser l'effort de pression au sol lors du freinage quel que soit le type de sol et quelles que soient les conditions météorologiques.

Par maximiser l'effort de pression, on entend que les forces de frottement entre la partie 107 et le sol sont augmentées et importantes, par exemple par rapport aux forces de frottement entre un élément métallique et le sol. Typiquement, l'effort de frottement généré entre la partie 107 et le sol est compris entre 5 tonnes et 15 tonnes.

Par exemple, la partie 107 destinée à être en contact avec le sol est réalisée en caoutchouc, ou en matériaux composites chargés de particules métalliques ou céramiques.

L'élément de contact 106 peut être adapté au type de sol sur lequel la voie est disposée de manière à garantir le freinage d'urgence hors voie ferrée. Par exemple, l'élément de contact 106 peut être adapté à un sol en matériau meuble tel que de la terre, ou à un sol en matériau dur tel que du béton, la structure de la partie 107 est donc travaillée pour maximiser l'adhérence sur la diversité de sols rencontrés.

L'élément de contact 106 est mobile entre une position escamotée dans laquelle l'élément de contact 106 n'est pas en contact avec le sol, et une position déployée dans laquelle l'élément de contact 106 est en contact avec le sol et est apte à ralentir le véhicule ferroviaire 10 en mouvement en appliquant un effort de pression au sol.

Le module de freinage102 comprend un actionneur 108 apte à déployer l'élément de contact 106 de sa position escamotée à sa position déployée de manière contrôlée par l'unité de contrôle 104.

L'unité de contrôle 104 est apte à communiquer au module de freinage 102 l'ordre de déployer l'élément de contact 106 dans sa position déployée lorsqu'au moins une partie du véhicule 10 sort de la voie sur laquelle le véhicule 10 circule.

L'unité de contrôle 104 et le modules de freinage 102 sont par exemple reliés entre eux par des câbles C.

Selon l'exemple décrit, l'unité de contrôle 104 est à déclenchement manuel. L'unité de contrôle 104 comprend par exemple au moins un bouton 109 ou au moins une poignée 109 à déclenchement manuel située dans au moins une voiture 12, 18 du véhicule 10, relié à un système apte à envoyer au moins un signal au module de freinage 102 en cas de sortie de voie d'au moins une partie du véhicule 10. Ce signal comprend au moins une information de déclenchement de l'actionneur 108 pour déployer l'élément de contact 106 de sa position escamotée à sa position déployée.

Selon un autre exemple, l'unité de contrôle 104 est à déclenchement automatique. Selon cet exemple, l'unité de contrôle 104 comprend au moins un capteur 109 de sortie de la voie sur laquelle le véhicule 10 circule. Le capteur de sortie de la voie est apte à envoyer au moins un signal au module de freinage 102 en cas de sortie de voie d'au moins une partie du véhicule 10. Ce signal comprend au moins une information de déclenchement de l'actionneur 108 pour déployer l'élément de contact 106 de sa position escamotée à sa position déployée.

Selon un mode de réalisation particulier, l'unité de contrôle 104 peut être déclenchée de manière automatique et manuelle.

De préférence, l'unité de contrôle 104 comprend un capteur de mesure d'accélération longitudinale 110 du véhicule et un calculateur 112 de la dérivée de l'accélération.

Le capteur de mesure d'accélération longitudinale 110 est par exemple un accéléromètre longitudinal 110.

L'unité de contrôle 104 est apte à asservir l'effort de pression au sol du module de freinage à l'accélération et à la dérivée de l'accélération dans la direction longitudinale L. Cet asservissement est adapté de sorte que la distance de freinage soit la plus courte possible, et que le freinage soit le moins brutal possible.

Avantageusement, chaque voiture 12, 18 comprend au moins un module de freinage 102 et l'unité de contrôle 104 est agencée pour déployer chaque élément de contact 106 de la position escamotée à la position déployée. De préférence, l'unité de contrôle 104 est agencée pour que l'effort de pression au sol de chaque module de freinage 102 soit dégressif de l'arrière du véhicule 10 vers l'avant du véhicule 10 c'est-à-dire que l'effort de pression au sol à l'arrière du véhicule est supérieur à l'effort de pression au niveau de la voiture de tête 18 du véhicule 10.

Ainsi, la répartition de la puissance de freinage est telle que la mise en accordéon du véhicule 10 est évitée. Par ailleurs, un freinage moins puissant à l'avant du véhicule 10 aide à arrêter complètement le véhicule 10.

En variante, chaque voiture 12 comporte une unité de contrôle 104 propre à communiquer des ordres au module de freinage 102 associé.

Selon un mode de réalisation, l'unité de contrôle 104 comprend, en outre, un capteur de mesure 114 d'accélération transversale du véhicule 10.

Le capteur de mesure 114 d'accélération transversale est apte à détecter un choc entre le véhicule 10 et un élément extérieur au véhicule 10. Un tel choc est parfois à l'origine de la sortie de voie du véhicule 10. En cas d'un tel choc, l'unité de contrôle 104 est apte à envoyer un signal au module de freinage 102. Ce signal comprend au moins une information de déclenchement de l'actionneur 108 pour déployer l'élément de contact 106 de sa position escamotée à sa position déployée.

Selon le mode de réalisation représenté par les figures 1 et 2, l'élément de contact 106 du module de freinage 102 est un coussin gonflable. Le coussin gonflable est par exemple fixé à la caisse du véhicule 10 par l'intermédiaire d'une semelle métallique vissée sur la structure.

En position escamotée, le coussin gonflable est dégonflé, il n'est pas en contact avec le sol comme représenté sur la figure 1.

En position déployée, le coussin gonflable est gonflé, il est en contact avec le sol comme représenté sur la figure 2 et applique un effort de pression au sol proportionnel à la pression interne du coussin.

Selon ce mode de réalisation, l'actionneur 108 est par exemple un système pyrotechnique comprenant des charges ou un réservoir sous pression couplé à une électrovanne.

De préférence, dans le cas d'un système pyrotechnique, les charges sont déclenchées de manière contrôlée par l'unité de contrôle 104.

L'ordre de déclenchement des charges est également contrôlé par l'unité de contrôle 104.

Cela permet de maîtriser la pression interne du coussin et donc la pression de contact du coussin avec le sol. Le véhicule 10 est freiné en fonction de la pression de contact du coussin avec le sol. En effet, plus la pression est importante et plus le temps de freinage sera court.

Un tel système pyrotechnique présente l'avantage d'être réactif et très rapide.

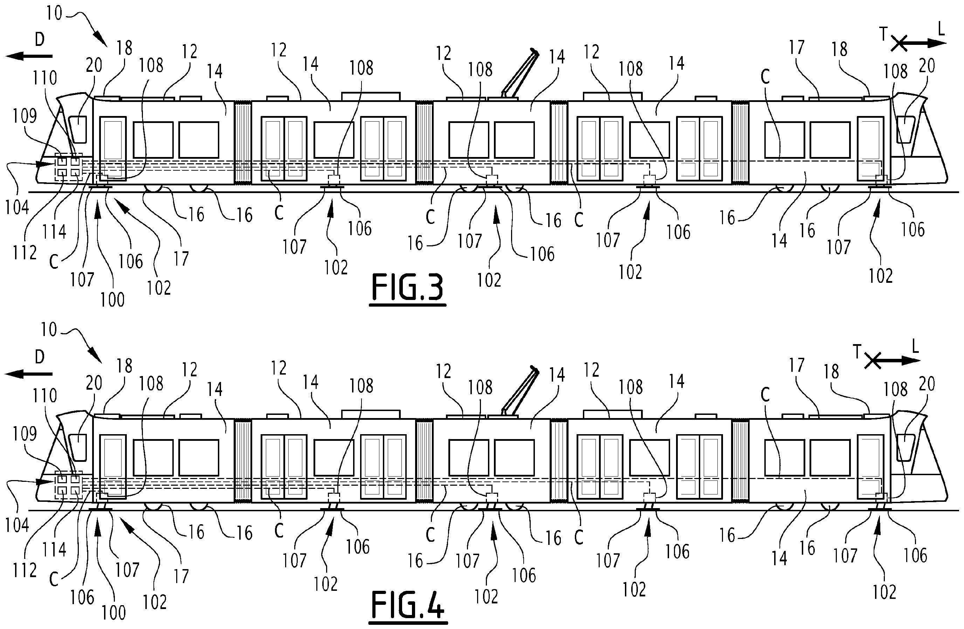

Les figures 3 et 4 représentent un deuxième mode de réalisation du module de freinage 102.

Selon ce mode de réalisation, l'élément de contact 106 du module de freinage 102 est un patin mécanique.

En position escamotée, le patin mécanique est replié sous la caisse 14 du véhicule 10, il n'est pas en contact avec le sol comme représenté sur la figure 3.

En position déployée, le patin mécanique est déplié, il est en contact avec le sol comme représenté sur la figure 4 et applique un effort de pression au sol proportionnel à la surface de contact du patin mécanique avec le sol.

Selon ce mode de réalisation, l'actionneur 108 est un dispositif de liaison reliant le patin mécanique à la caisse 14 du véhicule ferroviaire 10.

Le dispositif de liaison comprend par exemple un vérin hydraulique ou un vérin électrique.

Selon une variante, le patin mécanique est déployé passivement par arc-boutement. Selon cette variante, un dispositif libère une semelle de freinage qui tombe sur la voie ferrée. La semelle est maintenue par des bras mécaniques reliés à la structure. Ces bras étant plus longs que la hauteur entre le sol et la structure, s'arc-boutent sous l'effet du freinage et du poids du tramway. Une butée d'angle garantit que les bras mécaniques ne puissent se retourner sous l'effet de la force de freinage.

De préférence, l'effort de pression appliqué par le patin mécanique sur le sol est contrôlé par l'unité de contrôle 104.

Le véhicule 10 est freiné en fonction de la pression de contact du patin mécanique avec le sol.

Un exemple de procédé de freinage d'urgence pour un véhicule ferroviaire 10 comprenant le dispositif de freinage d'urgence 100 décrit ci-dessus va maintenant être décrit.

Le véhicule 10 circule sur une voie prévue à cet effet. Au moins une partie du véhicule ferroviaire 10 sort de la voie. La sortie de voie du véhicule 10 est par exemple causée par un choc entre le véhicule 10 et un élément extérieur au véhicule 10, par exemple un véhicule à moteur.

Dans le cas où l'unité de contrôle 104 est à déclenchement manuel, l'agent observe la sortie de voie du véhicule 10 et active l'unité de contrôle 104.

L'unité de contrôle 104 communique des ordres au module de freinage 102 de manière à déclencher l'actionneur 108. L'actionneur 108 déploie l'élément de contact 106 de sa position escamotée à sa position déployée.

Le véhicule 10 est freiné.

Selon un autre exemple, l'unité de contrôle 104 est à déclenchement automatique. Le capteur de sortie de la voie sur laquelle le véhicule 10 circule détecte la sortie de voie d'au moins une partie du véhicule 10.

L'unité de contrôle 104 envoie un signal au module de freinage 102. Ce signal comprend au moins une information de déclenchement de l'actionneur 108. L'actionneur 108 est déclenché et déploie l'élément de contact 106 de sa position escamotée à sa position déployée.

En cas de choc entre le véhicule 10 et un élément extérieur au véhicule 10, selon le mode de réalisation dans lequel l'unité de contrôle 104 comprend un capteur de mesure de l'accélération transversale du véhicule 10, le capteur de mesure de l'accélération transversale détecte le choc et l'unité de contrôle 104 envoie un signal au module de freinage 102 pour déployer l'élément de contact 106 de sa position escamotée à sa position déployée.

Le véhicule 10 est freiné.

Selon le mode de réalisation dans lequel l'unité de contrôle 104 comprend un capteur de mesure de l'accélération longitudinale du véhicule 10 et un calculateur de la dérivée de l'accélération dans la direction longitudinale, le capteur de mesure de l'accélération longitudinale prend une mesure. Le calculateur calcule la dérivée de l'accélération dans la direction longitudinale L.

L'unité de contrôle 104 asservit l'effort de pression au sol du module de freinage à l'accélération et à la dérivée de l'accélération dans la direction longitudinale L. Le signal envoyé par l'unité de contrôle 104 au module de freinage 102 comprend en outre une information quantitative pour réguler les efforts de pression au sol du module de freinage 102. La distance de freinage est alors la plus courte possible.

Ainsi, lorsque l'élément de contact 106 est un coussin gonflable, le système pyrotechnique ou le réservoir sous pression 108 est déclenché, entraînant un gonflage du coussin gonflable par une augmentation de la pression interne du coussin générant un effort de pression au sol du coussin proportionnel à la pression interne du coussin.
Le véhicule 10 est freiné.

Lorsque l'élément de contact 106 est un patin mécanique, le vérin hydraulique ou électrique est déclenché, entraînant un déploiement du patin dans sa position déployée en contact avec le sol.

Le véhicule 10 est freiné.

Avantageusement, chaque voiture 12 comporte au moins un module de freinage 102. L'unité de contrôle 104 communique de préférence des ordres sélectivement à chaque module de freinage 102, de sorte que l'effort de pression au sol est dégressif de l'arrière du véhicule 10 vers l'avant du véhicule 10, comme décrit précédemment.

Grâce à l'invention, des dégâts matériels et humains sont évités lors d'une sortie de voie du véhicule. Le dispositif de freinage d'urgence est réactif et rapide, la distance de course d'un tel véhicule ferroviaire 10 après un déraillement est ainsi maîtrisée.

En outre, l'intensité du freinage est adaptée afin de contrôler en temps réel la décélération et sa dérivée, et la mise en accordéon de la rame est évitée.

## Revendications

1. Véhicule ferroviaire (10) comprenant au moins une caisse (14), le véhicule (10) étant destiné à circuler sur une voie ferrée, le véhicule comprenant un dispositif de freinage d'urgence (100), le dispositif (100) comprenant :
- au moins un module de freinage (102), chaque module (102) comprenant un élément de contact (106) destiné à être en contact avec le sol au moment du freinage, l'élément de contact étant mobile entre une position escamotée dans laquelle l'élément de contact (106) n'est pas en contact avec le sol, et une position déployée dans laquelle l'élément de contact (106) est en contact avec le sol et est apte à ralentir le véhicule ferroviaire (10) en mouvement en appliquant un effort de pression au sol, et
- au moins une unité de contrôle (104) propre à communiquer des ordres au module de freinage (102),
dans lequel l'unité de contrôle (104) est apte à communiquer au module de freinage (102) l'ordre de déployer l'élément de contact (106) du module de freinage (102) dans sa position déployée lorsqu'au moins une partie du véhicule (10) sort de la voie ferrée sur laquelle le véhicule (10) circule.

2. Véhicule (10) selon la revendication 1, s'étendant suivant une direction longitudinale (L), dans lequel l'unité de contrôle (104) comprend un capteur de mesure d'accélération longitudinale (110) du véhicule (10) et un calculateur de la dérivée de l'accélération longitudinale (112), l'unité de contrôle (104) étant apte à asservir l'effort de pression au sol du module de freinage (102) à l'accélération et à la dérivée de l'accélération dans la direction longitudinale (L).

3. Véhicule (10) selon la revendication 2, dans lequel le module de freinage (102) comprend un actionneur (108) apte à déployer l'élément de contact (106) de la position escamotée à la position déployée de manière contrôlée par l'unité de contrôle (104).

4. Véhicule (10) selon la revendication 3, dans lequel l'élément de contact (106) du module de freinage (102) est un coussin gonflable et l'actionneur (108) est un système pyrotechnique comprenant des charges.

5. Véhicule (10) selon la revendication 3, dans lequel l'élément de contact (106) du module de freinage (102) est un patin de contact et l'actionneur (108) est un dispositif de liaison reliant le patin mécanique à la caisse (14) du véhicule ferroviaire (10).

6. Véhicule (10) selon l'une quelconque des revendications précédentes, dans lequel l'unité de contrôle (104) comprend, en outre, un capteur de mesure d'accélération transversale (114) du véhicule (10) apte à détecter un choc entre le véhicule ferroviaire (10) et un élément extérieur au véhicule (10).

7. Véhicule (10) selon l'une quelconque des revendications précédentes, comprenant une pluralité de voitures (12), chaque voiture (12) comprenant au moins un module de freinage (102) et dans lequel l'unité de contrôle (104) est agencée pour déployer chaque élément de contact (106) de la position escamotée à la position déployée de sorte que l'effort de pression au sol de chaque module de freinage (102) soit dégressif de l'arrière du véhicule (10) vers l'avant du véhicule (10).

8. Procédé de freinage d'urgence pour un véhicule ferroviaire (10) après une sortie de voie du véhicule (10), le procédé comprenant les étapes suivantes :
- fourniture du dispositif de freinage d'urgence (100) selon l'une quelconque des revendications 1 à 7 ;
- détection d'une sortie de la voie d'au moins une partie du véhicule ferroviaire (10);
- activation de l'unité de contrôle (104) ;
- activation du module de freinage (102) par l'unité de contrôle (104);
- déploiement de l'élément de contact (106) du module de freinage (102) de la position escamotée à la position déployée pour que l'élément de contact (106) entre en contact avec le sol,
- freinage du véhicule ferroviaire (10).

9. Procédé de freinage selon la revendication 8, dans lequel le véhicule (10) comporte une pluralité de voitures (12) comportant chacune au moins un module de freinage (102), et dans lequel l'effort de pression au sol est dégressif de l'arrière du véhicule (10) vers l'avant du véhicule (10).

10. Procédé de freinage selon la revendication 8 ou 9, comprenant en outre une étape de régulation de l'effort de pression au sol de chaque module de freinage (102) par l'unité de contrôle (104) pour que la distance de freinage soit la plus courte possible.

## Patentansprüche

1. Schienen-Fahrzeug (10), aufweisend wenigstens einen Gehäusekasten (14), wobei das Fahrzeug (10) dazu bestimmt ist, auf einem Schienengleis zu fahren, wobei das Fahrzeug eine Notbrems-Vorrichtung (100) aufweist, wobei die Vorrichtung (100) aufweist:
- wenigstens ein Bremsmodul (102), wobei jedes Modul (102) ein Kontaktelement (106) aufweist, das dazu bestimmt ist, im Augenblick des Bremsens mit dem Boden im Kontakt zu sein, wobei das Kontaktelement bewegbar ist zwischen einer Eingefahren-Position, in welcher das Kontaktelement (106) nicht mit dem Boden in Kontakt ist, und einer Ausgefahren-Position, in welcher das Kontaktelement (106) mit dem Boden in Kontakt ist, und imstande ist, das Schienenfahrzeug (10) in der Bewegung zu verlangsamen durch Aufbringen einer Druckkraft auf den Boden, und
- wenigstens eine Steuereinheit (104), die imstande ist, Befehle an das Bremsmodul (102) zu kommunizieren,
wobei die Steuereinheit (104) imstande ist, an das Bremsmodul (102) den Befehl zum Ausfahren des Kontaktelements (106) des Bremsmoduls (102) in dessen Ausgefahren-Position zu kommunizieren, wenn wenigstens ein Teil des Fahrzeugs (10) aus dem Schienengleis austritt, auf dem das Fahrzeug (10) fährt.

2. Fahrzeug (10) gemäß Anspruch 1, welches sich entlang einer Längsrichtung (L) erstreckt, wobei die Steuereinheit (104) einen Sensor zum Messen der Längsbeschleunigung (110) des Fahrzeugs (10) und einen Rechner zur Ableitung der Längsbeschleunigung (112) aufweist, wobei die Steuereinheit (104) imstande ist, die Druckkraft des Bremsmoduls (102) auf den Boden der Beschleunigung und der Ableitung der Beschleunigung in der Längsrichtung (L) nachzuführen.

3. Fahrzeug (10) gemäß Anspruch 2, wobei das Bremsmodul (102) einen Aktuator (108) aufweist, der imstande ist, das Kontaktelement (106) von der Eingefahren-Position in die Ausgefahren-Position auszufahren in einer von der Steuereinheit (104) gesteuerten Weise.

4. Fahrzeug (10) gemäß Anspruch 3, wobei das Kontaktelement (106) des Bremsmoduls (102) ein aufblasbares Kissen ist und der Aktuator (108) ein pyrotechnisches System ist, das Ladungen aufweist.

5. Fahrzeug (10) gemäß Anspruch 3, wobei das Kontaktelement (106) des Bremsmoduls (102) ein Kontaktschuh ist und der Aktuator (108) eine Verbindungsvorrichtung ist, die den Schuh mechanisch mit dem Gehäusekasten (14) des Schienen-Fahrzeugs (10) verbindet.

6. Fahrzeug (10) gemäß irgendeinem der vorhergehenden Ansprüche, wobei die Steuereinheit (104) ferner aufweist einen Sensor zum Messen der Querbeschleunigung (114) des Fahrzeugs (10), der imstande ist, einen Stoß zwischen dem Schienen-Fahrzeug (10) und einem zu dem Fahrzeug (10) externen Element zu erfassen.

7. Fahrzeug (10) gemäß irgendeinem der vorhergehenden Ansprüche, aufweisend eine Mehrzahl von Wagen (12), wobei jeder Wagen (12) wenigstens ein Bremsmodul (102) aufweist und wobei die Steuereinheit (104) eingerichtet ist zum Ausfahren jedes Kontaktelements (106) von der Eingefahren-Position in die Ausgefahren-Position derart, dass die Druckkraft jedes Bremsmoduls (102) auf den Boden degressiv ist vom Heck des Fahrzeugs (10) aus zur Front des Fahrzeugs (10) hin.

8. Verfahren zum Notbremsen für ein Schienen-Fahrzeug (10) nach einem Gleisaustritt des Fahrzeugs (10), wobei das Verfahren die folgenden Schritte aufweist:
- Bereitstellen der Notbrems-Vorrichtung (100) gemäß irgendeinem der Ansprüche 1 bis 7,
- Erfassen eines Austritts aus dem Gleis wenigstens eines Teils des Schienen-Fahrzeugs (10),
- Aktivieren der Steuereinheit (104),
- Aktivieren des Bremsmoduls (102) durch die Steuereinheit (104),
- Ausfahren des Kontaktelements (106) des Bremsmoduls (102) von der Eingefahren-Position in die Ausgefahren-Position, damit das Kontaktelement (106) in Kontakt mit dem Boden eintritt,
- Bremsen des Schienen-Fahrzeugs (10).

9. Verfahren zum Bremsen gemäß Anspruch 8, wobei das Fahrzeug (10) eine Mehrzahl von Wagen (12) aufweist, die jeweils wenigstens ein Bremsmodul (102) aufweisen, und wobei die Druckkraft auf den Boden degressiv ist vom Heck des Fahrzeugs (10) aus zur Front des Fahrzeugs (10) hin.

10. Verfahren zum Bremsen gemäß Anspruch 8 oder 9, ferner aufweisend einen Schritt des Regelns der Druckkraft auf den Boden durch jedes Bremsmodul (102) mittels der Steuereinheit (104), damit die Bremsstrecke so kurz wie möglich wird.

## Claims

1. Railway vehicle (10) comprising at least one body (14), wherein the vehicle (10) is intended to run on a railway track, and wherein the vehicle comprises an emergency braking device (100), wherein the device (100) comprises:
- at least one brake module (102), wherein each module (102) comprises a contact element (106) that is intended to be in contact with the ground at the moment of braking, wherein the contact element may be moved between a retracted position in which the contact element (106) is not in contact with the ground, and a deployed position in which the contact element (106) is in contact with the ground and is able to slow down the railway vehicle (10) by applying a pressure force to the ground, and
- at least one control unit (104) that is capable of communicating commands to the brake module (102),
wherein the control unit (104) is designed to communicate to the brake module (102) the command to deploy the contact element (106) of the brake module (102) to its deployed position, when at least one portion of the vehicle (10) leaves the track on which the vehicle (10) is traveling.

2. Vehicle (10) according to claim 1 extending in a longitudinal direction (L), wherein the control unit (104) comprises a sensor (110) measuring the longitudinal acceleration of the vehicle (10), and a calculator of the derivative of the longitudinal acceleration (112), wherein the control unit (104) is able to control the pressure force on the ground of the brake module (102) with respect to the acceleration and the derivative of the acceleration in the longitudinal direction (L).

3. Vehicle (10) according to claim 2, wherein the brake module (102) comprises an actuator (108) that is designed to deploy the contact element (106) from the retracted position to the deployed position in a controlled manner by the control unit (104).

4. Vehicle (10) according to claim 3, wherein the contact element (106) of the brake module (102) is an airbag and the actuator (108) is a pyrotechnic system comprising charges.

5. Vehicle (10) according to claim 3, wherein the contact element (106) of the brake module (102) is a contact pad and the actuator (108) is a device connecting the mechanical pad to the body (14) of the railway vehicle (10).

6. Vehicle (10) according to any one of the preceding claims, wherein the control unit (104) further comprises a sensor (114) measuring the transverse acceleration of the vehicle (10) that is designed to detect a shock between the railway vehicle (10) and an element outside the vehicle (10).

7. Vehicle (10) according to any one of the preceding claims comprising a plurality of cars (12), wherein each car (12) comprises at least one brake module (102), and wherein the control unit (104) is arranged to deploy each contact element (106) from the retracted position to the deployed position, so that the pressure force on the ground of each brake module (102) decreases from the rear of the vehicle (10) towards the front of the vehicle (10).

8. Emergency braking method for a railway vehicle (10) after the vehicle (10) leaves the track, wherein the method comprises the following steps:
- provision of the emergency braking device (100) according to any one of the claims 1 to 7;
- detection of at least a portion of the railway vehicle (10) leaving the track;
- activation of the control unit (104);
- activation of the brake module (102) by the control unit (104);
- deployment of the contact element (106) of the brake module (102) from the retracted position to the deployed position so that the contact element (106) comes into contact with the ground,
- braking of the railway vehicle (10).

9. Braking method according to claim 8, wherein the vehicle (10) comprises a plurality of cars (12), wherein each comprises at least one brake module (102), and wherein the pressure force on the ground decreases from the rear of the vehicle (10) towards the front of the vehicle (10).

10. Braking method according to claim 8 or 9, further comprising a step of controlling the pressure force on the ground of each brake module (102) by the control unit (104), so that the braking distance is as short as possible.
